(19) Europäisches Patentamt
European Patent Office
Office européen des brevets

(11) **EP 3 328 314 B1**

(12) **EUROPEAN PATENT SPECIFICATION**

(45) Date of publication and mention
of the grant of the patent:
**22.05.2019 Bulletin 2019/21**

(51) Int Cl.:
**A61C 17/22** *(2006.01)*          **A61C 17/34** *(2006.01)*

(21) Application number: **16735704.5**

(86) International application number:
**PCT/IB2016/053732**

(22) Date of filing: **23.06.2016**

(87) International publication number:
**WO 2017/017541 (02.02.2017 Gazette 2017/05)**

(54) **METHODS AND SYSTEMS FOR MINIMIZING DRIVETRAIN INTERFERENCE OF SENSORS IN AN ORAL CLEANING DEVICE**

VERFAHREN UND SYSTEME ZUR MINIMIERUNG VON ANTRIEBSSTRANGSTÖRUNGEN VON SENSOREN IN EINER MUNDREINIGUNGSVORRICHTUNG

PROCÉDÉS ET SYSTÈMES PERMETTANT DE RÉDUIRE AU MINIMUM LES INTERFÉRENCES DE TRANSMISSION DE CAPTEURS DANS UN DISPOSITIF DE NETTOYAGE BUCCAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.07.2015 US 201562197831 P**

(43) Date of publication of application:
**06.06.2018 Bulletin 2018/23**

(60) Divisional application:
**19166771.6**

(73) Proprietor: **Koninklijke Philips N.V.**
**5656 AE Eindhoven (NL)**

(72) Inventor: **DEANE, Steven Charles**
**5656 AE Eindhoven (NL)**

(74) Representative: **van Oudheusden-Perset, Laure E.**
**Philips International B.V.**
**Intellectual Property & Standards**
**High Tech Campus 5**
**5656 AE Eindhoven (NL)**

(56) References cited:
**WO-A1-2014/097198    CN-A- 101 716 099
US-A- 5 544 382**

## Description

### Field of the Invention

The present disclosure is directed generally to methods and systems for minimizing drivetrain interference of oral cleaning device sensors.

### Background

There are many feedback mechanisms designed to provide information to users of oral cleaning devices about the efficacy of their brushing. For example, known types of feedback include brushing force (*e.g.,* whether the user is using too little or too much force), gum detection (*e.g.,* whether the user is brushing too much over gums, and/or how long the user has brushed in each region of the mouth), and plaque sensing (*e.g.,* whether the plaque has been removed from a particular area), among others. These methods and techniques are intended to give feedback to a user so that they can improve their brushing technique, sometimes in real-time when a problem or deficiency occurs.

To accomplish these methods and techniques, it is necessary to have one or more sensors in the oral cleaning device. The sensors may be a pressure sensor, accelerometer, gyroscope, inclinometer, and/or magnetometer, among many other types of sensors. However, due to the limited amount of space within an oral cleaning device, often the one or more sensors are located in close proximity with the device drivetrain. The drivetrain, which generates the movement of the brush head to significantly improve cleaning of the dental space, will emit both electromagnetic interference and mechanical vibration which can interact with the sensor to affect or completely overwhelm the sensor signals. Although carefully designed shielding, placement, and layout of the sensors and drivetrain can help to reduce the effect of the drivetrain energy and movement on the sensors, these measures do not eliminate all of the effect and thus the sensor remains susceptible.

The undesirable interaction of the drivetrain and the sensors is further complicated by the fact that the frequency of the drivetrain can vary between different modes or settings, and thus many different harmonics are produced depending on the drivetrain excitation. The drivetrain harmonics will typically contain significant components at above the Nyquist frequency of the sensor sampling, resulting in them being aliased to lower frequencies, which can interfere with the desired signals. If the drivetrain and sensor sampling clocks are independent, the frequency of this interference is not fixed, making removal by a filter ineffective.

Accordingly, there is a need in the art for systems and methods for minimizing the effect of the electromagnetic interference and mechanical vibration from a drivetrain on oral cleaning device sensors. WO2014/097198 discloses a drive noise tolerant plaque detection system.

### Summary of the Invention

The invention is as defined in claims 1 and 9. The present disclosure is directed to inventive methods and systems for minimizing drivetrain interference of oral cleaning device sensors. Various embodiments and implementations herein are directed to an oral cleaning device in which a sensor sampling frequency and a drivetrain frequency are coordinated. In order to coordinate the frequencies, the oral cleaning device uses a master clock that provides input to both the sensor and the drivetrain such that the sensor sample frequency and the drivetrain frequency comprise a predetermined ratio. The predetermined ratio may be variable if the sensor sampling frequency and/or the drivetrain frequency are adjustable or variable.

According to an aspect, an oral cleaning device includes: (i) a body portion; (ii) a brush head member extending from the body portion and having a bristle face configured to move relative to the body portion; (iii) a sensor including a clock, where the sensor is configured to sample sensor data at a sampling frequency which is based on input from the clock; (iv) a second clock; (v) a drivetrain in communication with the second clock and configured to generate movement of the bristle face at a first drivetrain frequency, where the first drivetrain frequency is based on input from the second clock; and (vi) a controller in communication with the sensor clock and the second clock, the controller configured to receive input from the sensor clock and the second clock in order to coordinate the sampling frequency and the first drivetrain frequency and minimize drivetrain interference of the sensor.

According to an embodiment, oral cleaning device includes a controller configured to process sensor information obtained from the one or more sensors. According to an embodiment, the controller comprises the master clock. According to another embodiment, the master clock is separate from the controller.

According to an embodiment, the sensor sampling frequency is equal to the first drivetrain frequency multiplied by $(n+j/k)$, wherein $n$ is an integer, $j$ is a positive integer, and $k$ is a positive integer, and further wherein $0<j<k$.

According to an embodiment, $k$ is chosen such that a bandwidth of the sensor signal is less than the first drivetrain frequency divided by $k$.

According to an embodiment, the first drivetrain frequency is adjustable by a user.

According to the invention, a method for minimizing interference of a sensor of an oral cleaning device includes the steps of: (i) providing an oral cleaning device comprising: a master clock; a sensor in communication with the master clock, the sensor configured to sample sensor data at a sampling frequency which is based on input from the master clock; a second clock and a drivetrain in communication with the second clock, the drivetrain configured to generate movement of a bristle face of the device at a first drivetrain frequency which is based on input from the second clock; (ii) coordinating the sampling frequency and the first drivetrain frequency to minimize drivetrain interference of the sensor; and (iii) obtaining sensor data from the sensor.

According to an embodiment, the method further includes the step of adjusting the sensor sampling frequency in response to an adjustment of the first drivetrain frequency.

As used herein for purposes of the present disclosure, the term "controller" is used generally to describe various apparatus relating to the operation of a stream probe apparatus, system, or method. A controller can be implemented in numerous ways (e.g., such as with dedicated hardware) to perform various functions discussed herein. A "processor" is one example of a controller which employs one or more microprocessors that may be programmed using software (e.g., microcode) to perform various functions discussed herein. A controller may be implemented with or without employing a processor, and also may be implemented as a combination of dedicated hardware to perform some functions and a processor (e.g., one or more programmed microprocessors and associated circuitry) to perform other functions. Examples of controller components that may be employed in various embodiments of the present disclosure include, but are not limited to, conventional microprocessors, application specific integrated circuits (ASICs), and field-programmable gate arrays (FPGAs).

It should be appreciated that all combinations of the foregoing concepts and additional concepts discussed in greater detail below (provided such concepts are not mutually inconsistent) are contemplated as being part of the inventive subject matter disclosed herein. In particular, all combinations of claimed subject matter appearing at the end of this disclosure are contemplated as being part of the inventive subject matter disclosed herein.

These and other aspects of the invention will be apparent from and elucidated with reference to the embodiment(s) described hereinafter.

## Brief Description of the Drawings

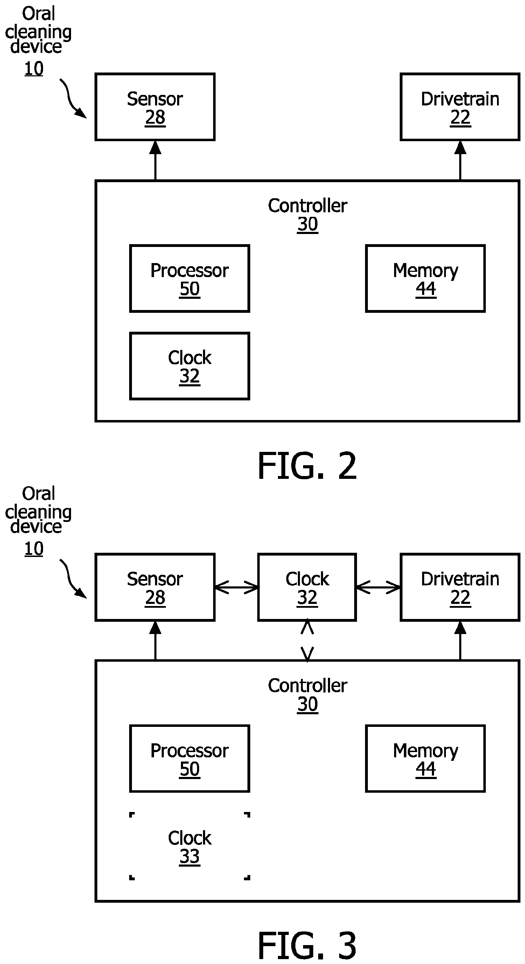

In the drawings, like reference characters generally refer to the same parts throughout the different views. Also, the drawings are not necessarily to scale, emphasis instead generally being placed upon illustrating the principles of the invention. Embodiments shown in Figures 2,3 and described later in the description, are for information but do not form part of the invention.

FIG. 1 is a representation of an oral cleaning device in accordance with an embodiment.
FIG. 2 is a schematic representation of an oral cleaning device control system in accordance with an embodiment.
FIG. 3 is a schematic representation of an oral cleaning device control system in accordance with an embodiment.
FIG. 4 is a schematic representation of an oral cleaning device control system in accordance with the invention.
FIG. 5 is a graph of sensor sampling frequency and drivetrain frequency in accordance with an embodiment.
FIG. 6 is a graph of sensor sampling frequency and drivetrain frequency in accordance with an embodiment.
FIG. 7 is a graph of sensor sampling frequency and drivetrain frequency in accordance with an embodiment.
FIG. 8 is a flowchart depicting a method for synchronizing a sensor sampling frequency and a drivetrain frequency in accordance with an embodiment.

## Detailed Description of Embodiments

The present disclosure describes various embodiments of an oral cleaning device, system, and method. More generally, Applicants have recognized and appreciated that it would be beneficial to provide an oral cleaning device that accurately samples sensor data while minimizing electromagnetic and mechanical interference from the device drivetrain. For example, the oral cleaning device coordinates the sensor sampling frequency and the drivetrain frequency such that they are offset by a predetermined value. The oral cleaning device uses a master clock to provide input to both the sensor and the drivetrain in order to coordinate the sensor sampling frequency and the drivetrain frequency. The predetermined value may be variable if the sensor sampling frequency and/or the drivetrain frequency are adjustable or variable.

A particular goal of utilization of the embodiments and implementations herein is to provide brushing information using an oral cleaning device, e.g., a Philips Sonicare™ toothbrush (manufactured by Koninklijke Philips Electronics, N.V.).

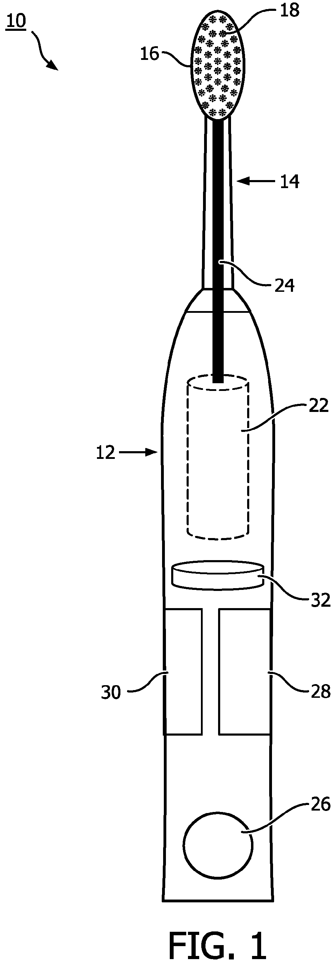

Referring to FIG. 1, in one embodiment, an oral cleaning device 10 is provided that includes a body portion 12 and a brush head member 14 mounted on the body portion. Brush head member 14 includes at its end remote from the body portion a brush head 16. Brush head 16 includes a bristle face 18, which provides a plurality of bristles. According to an embodiment, the bristles extend along an axis substantially perpendicular to the head's axis of elongation, although many other embodiments of the brush head and bristles are possible.

Brush head member 14, brush head 16, and bristle face 18 are mounted so as to be able to move relative to the body portion 12. The movement can be any of a variety of different movements, including vibrations or rotation, among others. According to an embodiment, brush head member 14 is mounted to the body so as to be able to vibrate relative to body portion 12, or, as another example, brush head 16 is mounted to brush head member 14 so as to be able to vibrate relative to body portion 12. For example, in accordance with an embodiment, the bristles are vibrated at a first frequency 40 that is equal to or greater than approximately 250 Hz, but many other frequencies, patterns, and vibrations are possible. The brush head member 14 can be fixedly mounted onto body portion 12, or it may alternatively be detachably mounted so that brush head member 14 can be replaced with a new one when the bristles or another component of the device are worn out and require replacement.

Body portion 12 includes a drivetrain 22 for generating movement and a transmission component 24 for transmitting the generated movements to brush head member 14. For example, drivetrain 22 can comprise a motor or electromagnet(s) that generates movement of the transmission component 24, which is subsequently transmitted to the brush head member 14. Drivetrain 22 can include components such as a power supply, an oscillator, and one or more electromagnets, among other components. In this embodiment the power supply comprises one or more rechargeable batteries, not shown, which can be electrically charged in a charging holder in which oral cleaning device 10 is placed when not in use. In this embodiment, body portion 12 is further provided with an on/off button 26 to activate and deactivate drivetrain 22. It is anticipated that brush head member 14 can be affixed to and used with a body portion 12 of a powered oral care device, such as an oral cleaning device, varieties of which are commonly known in the industry.

The oral cleaning device 10 includes one or more sensors 28 located on or within the device. Sensor 28 is shown on FIG. 1 within the middle portion of body portion 12, but may be located anywhere on the device, including for example within brush head member 14 or brush head 16, to sense brushing information. Many types of sensors can be used with the oral cleaning device. In some embodiments, for example, a force sensor can be used to detect bristle pressure, load, or force applied against the teeth. Such force sensors can take various forms, including for example, Hall effect sensors or other known mechanical or magnetic sensors. In other embodiments, a plaque detection sensor can be used to detect the presence of plaque on the teeth. For example, a pressure sensor can be configured to measure feedback from air applied to a dental surface to characterize the dental surface. In some embodiments, a gum detection sensor can be used to detect whether the bristle set is brushing gums rather than teeth. In further embodiments, a MEMS (micro-electro-mechanical system) gyroscope, an accelerometer, and/or an inclinometer can be positioned on the oral cleaning device to detect rotational velocity of the brush head and orientation of the brush head in the mouth during operation. The particular form of sensor is not an essential part of the present system, as long as the sensor is accurate.

A controller 30 can be located within the device and can be configured to process sensor information obtained from the one or more sensors 28. In some embodiments, a storage device (memory) 44 for storing brushing information may be included for further analysis of information.

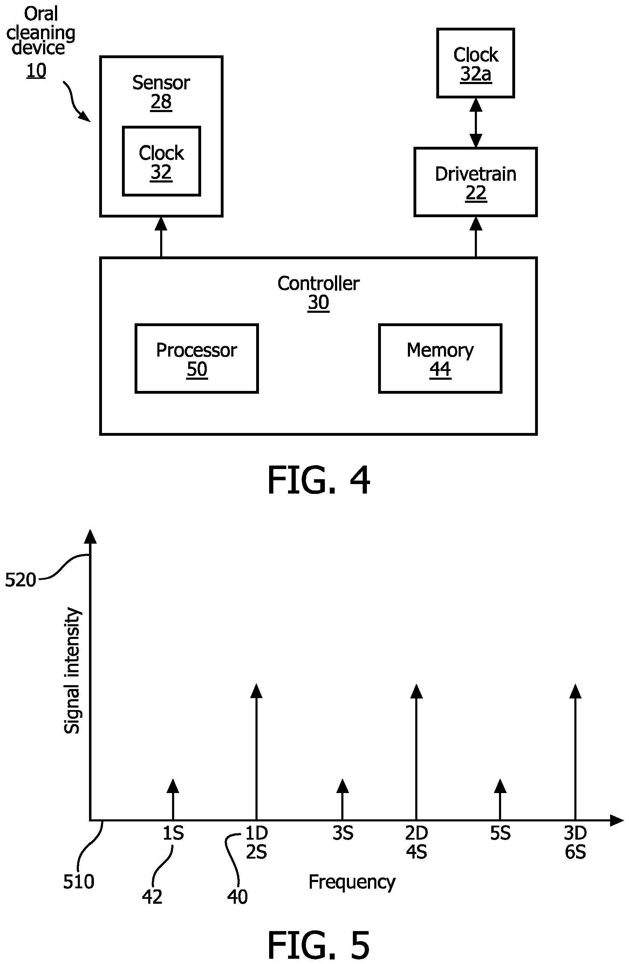

Oral cleaning device 10 also includes a master clock 32. The master clock provides time information to both the drivetrain 22 and the one or more sensors 28. According to an embodiment, the time information from the master clock is utilized by the one or more sensors 28 to establish and/or maintain the sensor sampling frequency 42 (shown in FIGS. 5-8). The sensor sampling frequency 42 is the rate at which the sensor 28 or controller 30 samples the data stream. According to an embodiment, the time information from the master clock 32 is utilized by the drivetrain 22 to establish and/or maintain the first frequency 40 of the drivetrain (shown in FIGS. 5-7). To prevent interference of the sensor by the electromagnetic energy and/or mechanical energy of the drivetrain, the sensor sampling frequency 42 and the drivetrain first frequency 40 are coordinated due to the information obtained from the same master clock 32, as described herein or otherwise envisioned.

Referring to FIG. 2, an embodiment of an oral cleaning device 10 is provided. According to an embodiment, oral cleaning device 10 includes one or more sensors 28, drivetrain 22, and controller 30. The oral cleaning device can be controlled by controller 30, which can be or include a processor 50, and can include or communicate with a storage device 44, and a master clock 32. Sensor 28 is any of the sensors described or otherwise envisioned herein, and is programmed and/or configured to obtain sensor data regarding one or more aspects of the oral cleaning device. For example, master clock 32 may be separate from, or be part of either sensor 28 and/or drivetrain 22. According to an embodiment, for example, the drivetrain motor can be the master clock 32. In this embodiment, the motor runs at a speed that may vary with battery voltage, temperature, or other aspects of the system. This speed is detected or measured by the controller, and the necessary frequency is calculated by the controller and imposed on the sensor in order to achieve the predetermined or desired ratio of the sensor sampling frequency 42 to the drivetrain first frequency 40. Thus, if the operating frequency of the motor is disturbed for any reason, the sensor sampling frequency 42 can be automatically adjusted to the proper ratio.

The processor can direct functionality and/or operation of sensor 28, including but not limited to the sensor sampling frequency 42. Similarly, controller 30 can control, direct, and/or modify the operation of the drivetrain 22, including but not limited to the first frequency 40 of the drivetrain. According to the embodiment depicted in FIG. 1, the clock 32 provides time information to both the drivetrain 22 and the one or more sensors 28 such that the sensor sampling frequency 42 and the first frequency 40 are coordinated.

According to another embodiment depicted in FIG. 3, the master clock 32 is separate from controller 30. The master clock provides time information to both the drivetrain 22 and the one or more sensors 28 such that the sensor sampling frequency 42 and the first frequency 40 are coordinated. The controller 30 may optionally communicate with master clock 32 to coordinate functionality of the sensor and/or drivetrain. Controller 30 may optionally include its own clock 33.

According to the invention depicted in FIG. 4, sensor 28 includes its own clock 32 for timing information for sensor sampling frequency 42, and drivetrain 22 communicates with a separate clock 32a for timing information for first frequency 40. Clock 32a may be a component of controller 30 or may be a separate clock. The controller 30 can control the first frequency 40 of the drivetrain in order to coordinate functionality of the sensor and/or drivetrain using time information from both the sensor clock 32 and the other clock 32a.

According to an embodiment, the sensor sampling frequency 42 is equal to the first frequency 40 of the drivetrain multiplied by (n+j/k), wherein *n* is an integer and may be zero, *k* is a positive integer, and *j* is a positive integer and may be zero, such that $0 < j < k,$ although n and j may not equal zero simultaneously.

$$\text{Sensor sampling frequency 42} = \text{Drivetrain frequency 40} * (n + j/k) \qquad \text{(Eq. 1)}$$

The value of *k* is preferably not too large, or the drivetrain will interfere with the sensor. Accordingly, *k* is chosen such that the bandwidth of the sensor signal is less than the frequency of the drivetrain/*k*. This results in many drivetrain harmonics being mapped to zero frequency, *i.e.* DC, or out of the bandwidth of the sensor signal, both of which can readily be removed from the signal.

As just one example, where the multiplier is 1, the drivetrain excites once per sensor sampling and thus any interference from its fundamental or harmonics is cancelled out. However, it may be desirable to make the sensor sampling frequency different, to optimize circuit cost and performance, and it can be seen that any permitted value of n, j, and k will result in the desired narrow band signal being spaced between the harmonics of the drivetrain interference, and so recovered by narrow band filtering either in the digital or analogue domain.

Referring to FIG. 5, a graph of sensor sampling frequency 42 ("S") and a drivetrain frequency 40 ("D") is provided in accordance with an embodiment, where the x-axis 510 depicts frequency and the y-axis 520 depicts signal intensity. In this example, n=0, j=1, and k=2, and thus the multiplier is 0.5 (n+j/k, or 0+1/2). In other words, the drivetrain excites or moves or causes movement (1D, 2D, 3D, etc.) once every other signal sampling (IS, 2S, 3S, etc.). For example, if drivetrain frequency 40 is 250 Hz in this example, the sensor sampling frequency 42 is 125 Hz, which is 250 Hz times the multiplier of 0.5. In general, j=1, k=2 solutions provide the best spacing margin, and so the lowest filtering requirements for any n.

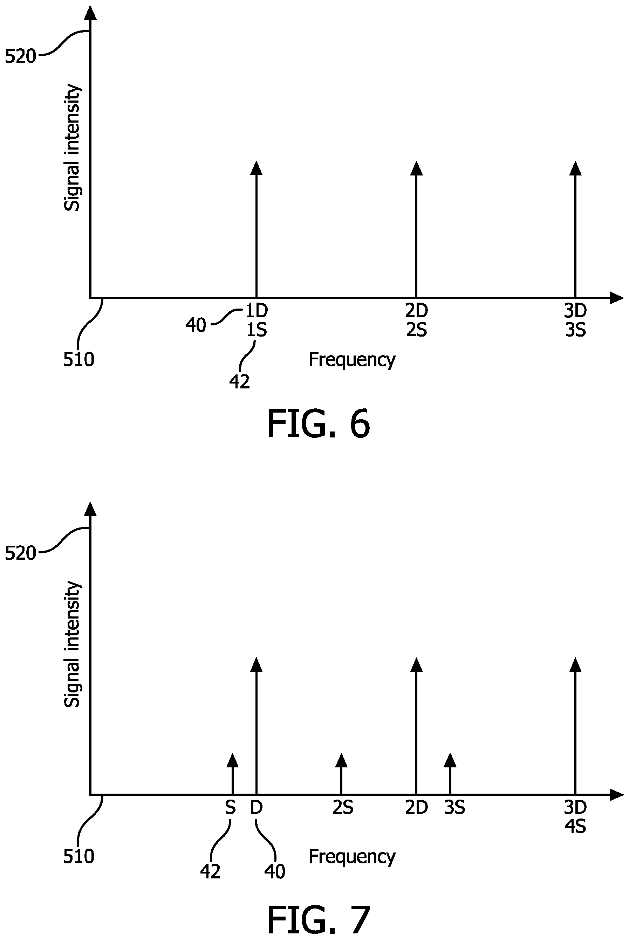

Referring to FIG. 6, a graph of sensor sampling frequency 42 ("S") and a drivetrain frequency 40 ("D") is provided in accordance with an embodiment, where the x-axis 510 depicts frequency and the y-axis 520 depicts signal intensity. In this example the multiplier is 1. In other words, the drivetrain excites or moves or causes movement (1D, 2D, 3D, etc.) at the same frequency as the signal sampling (IS, 2S, 3S, etc.), and thus any interference from the drivetrain fundamental or harmonics is canceled out. For example, if drivetrain frequency 40 is 250 Hz in this example, the sensor sampling frequency 42 is also 250 Hz, which is 250 Hz times the multiplier of 1. As described in detail above, the frequencies are then maintained because both frequencies obtain timing information from the same master clock 32.

According to another embodiment, it may be desirable to increase the sensor sampling frequency 42. Referring to FIG. 7, a graph of sensor sampling frequency 42 and a drivetrain frequency 40 is provided in accordance with an embodiment, where the x-axis 510 depicts frequency and the y-axis 520 depicts signal intensity. Here, n=0, j=3, and k=4, which results in a multiplier of 0.75 (n+j/k, or 0+3/4), and which places the sampling of the signal away from the harmonic noise of the drivetrain, with enough margin to avoid interference. According to an embodiment, this arrangement may require more stringent filtering since the spacing between the desired signal and the drivetrain harmonics is reduced. In other words, a digital or analog filter will be necessary to recover the desired signal from the data by signal processing techniques.

Many other multipliers are possible, such as 7/8 (or 0.875), among others. It may be necessary to determine and/or adjust the multiplier depending on the design and/or needs of the system. For example, the multiplier may be determined at least in part on the required sensor sampling frequency and/or the capabilities of the sensor filtering, among other elements of the design and/or needs of the system.

As another example, if the drivetrain excitation frequency is 250Hz, a sensor sampling frequency of 250Hz (n=1, multiplier 1) or 1kHz (n=4, multiplier 4) may be convenient as choices for the sensor sampling frequency. If in a different mode the drivetrain frequency is 260Hz, then sensor sampling of 260 or 1040Hz may be chosen in these examples. When the drivetrain frequency is changed, the multiple of the signal used for the sensor sampling does not need to stay the same. For example, if there is a change in the frequency of the drivetrain, the multiplier can change to avoid the sensor sampling frequency becoming an inconveniently high or low value.

According to an embodiment, if a digital circuit such as a microprocessor is used to perform digital signal processing, its master clock should be an integer multiple/division of the master clock used for the drivetrain in order to further minimize interference from the drivetrain. A single microprocessor is often used to both generate the drivetrain signal and process sensor data.

According to another embodiment, the drivetrain may produce inference mainly at odd numbered harmonics. In this case making $n$ an odd integer causes an even harmonic to be mapped to DC, so the DC signal level may still be used.

According to yet another embodiment, if the microprocessor and sensor have different clock signals, the system can be configured to detect the sensor clock in the microprocessor such that the drivetrain frequency may be synchronized to a fixed multiple according to the formula. This results in the two key frequencies being derived from the same master clock, thereby minimizing interference from the drivetrain. All of these embodiments prevent unwanted harmonic interference from the various components which can otherwise result in a signal that can interfere with the sensor signal.

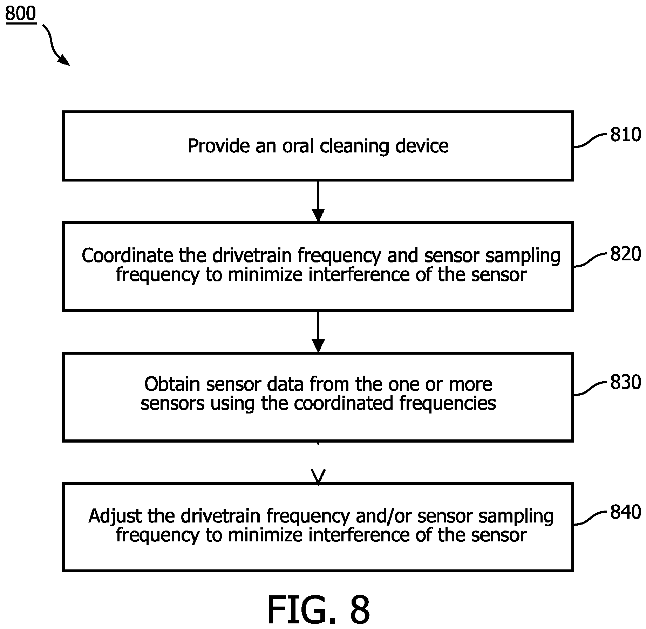

Referring to FIG. 8, a flowchart illustrating a method 800 for minimizing drivetrain interference of oral cleaning device sensors in accordance with an embodiment of the invention is disclosed. In step 810, an oral cleaning device 10 is provided. Oral cleaning device 10 may be any of the embodiments described herein or otherwise envisioned, and can include any of the components of the units described in conjunction with FIGS. 1-4. For example, according to one embodiment, oral cleaning device 10 can include a body portion 12, a brush head member 14 with a bristle face 18, a master clock 32, a drivetrain 22 having a first frequency 40, and one or more sensors 28 have a sensor sampling frequency 42.

In step 820, the drivetrain frequency 40 and/or the sensor sampling frequency 42 are initiated, determined, or selected using a master clock 32, minimizing drivetrain interference of oral cleaning device sensors. For example, the sensor sampling frequency 42 can be demodulated to a frequency where electromagnetic and/or mechanical interference from the drivetrain is minimized or eliminated, as described in detail above.

In step 830, the one or more sensors 28 of the oral cleaning device 10 obtain sensor data during operation of the device - which includes operation of the drivetrain - where the sensor and drive train operate at the initiated, determined, or selected frequencies.

In optional step 840, the drivetrain frequency 40 and/or the sensor sampling frequency 42 is adjusted. For example, the user may select a more or less intense cleaning, in which case the drivetrain frequency may be increased or decreased. For example, the oral cleaning device 10 may include multiple settings each of which utilize a different frequency for the drivetrain. This frequency may be a predetermined frequency that depends on the selected setting. Thus, the sensor sampling frequency 42 may need to be adjusted to avoid the new harmonics created by the drivetrain at the adjusted drivetrain frequency 40. The controller, for example, may be programmed or configured to detect a user selection and/or new drivetrain frequency 40 and determine the optimal sensor sampling frequency. The optimal sensor sampling frequency may be a predetermined value that is programmed with the corresponding drivetrain frequency 40, or may determined experimentally by the controller, among other options.

Although the methods and systems described herein are applied to oral cleaning devices, it is anticipated that the methods and systems could similarly be utilized for other personal care devices, including but not limited to skin care devices, shaving devices, grooming devices, and others.

All definitions, as defined and used herein, should be understood to control over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of."

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

It should also be understood that, unless clearly indicated to the contrary, in any methods claimed herein that include more than one step or act, the order of the steps or acts of the method is not necessarily limited to the order in which the steps or acts of the method are recited.

In the claims, as well as in the specification above, all transitional phrases such as "comprising," "including," "carrying," "having," "containing," "involving," "holding," "composed of," and the like are to be understood to be open-ended, i.e., to mean including but not limited to.

## Claims

1. An oral cleaning device (10) comprising:

   a body portion (12);
   a brush head member (14) extending from the body portion, the head comprising a bristle face (18), wherein the bristle face is configured to move relative to the body portion;
   a master clock (32);
   a sensor (28) in communication with the master clock, wherein the sensor is configured to sample sensor data at a sensor sampling frequency (42), the sampling frequency based on input from the master clock;
   a second clock (32a); and
   a drivetrain (22) in communication with the second clock (32a), wherein the drivetrain is configured to generate movement of the bristle face at a first drivetrain frequency (40), the first drivetrain frequency based on input from the second clock (32a);
   wherein the sampling frequency and the first drivetrain frequency are coordinated to minimize drivetrain interference of the sensor.

2. The oral cleaning device of claim 1, further comprising a controller (30) configured to process sensor information obtained from the one or more sensors.

3. The oral cleaning device of claim 2, wherein the controller comprises the master clock.

4. The oral cleaning device of claim 2, wherein the master clock is separate from the controller.

5. The oral cleaning device of claim 1, wherein the sensor sampling frequency is equal to the first drivetrain frequency multiplied by $(n+j/k)$, wherein $n$ is an integer, $j$ is a positive integer, and $k$ is a positive integer, and further wherein $0<j<k$.

6. The oral cleaning device of claim 5, wherein $k$ is chosen such that a bandwidth of the sensor signal is less than the first drivetrain frequency divided by $k$.

7. The oral cleaning device of claim 1, wherein the first drivetrain frequency is adjustable by a user.

8. The oral cleaning device of claim 1 further comprising:
   a controller (30) in communication with the first clock and the second clock, wherein the controller is configured to receive input from the first clock and the second clock to coordinate the sampling frequency and the first drivetrain frequency and minimize drivetrain interference of the sensor.

9. A method (800) for minimizing interference of a sensor (28) of an oral cleaning device (10), the method comprising the steps of:

   providing (810) an oral cleaning device comprising: a master clock (32); a sensor in communication with the master clock, wherein the sensor is configured to sample sensor data at a sensor sampling frequency (42), the sampling frequency based on input from the master clock; a second clock; and a drivetrain (22) in communication with the second clock, wherein the drivetrain is configured to generate movement of a bristle face (18) of the device at a first drivetrain frequency (40), the first drivetrain frequency based on input from the second clock; coordinating (820) the sampling frequency and the first drivetrain frequency to minimize drivetrain interference of the sensor; and

obtaining (830) sensor data from the sensor.

10. The method of claim 9, wherein the sensor sampling frequency is equal to the first drivetrain frequency multiplied by (n+j/k), wherein $n$ is an integer, $j$ a positive integer, and $k$ is a positive integer, and further wherein $0<j<k$.

11. The method of claim 10, wherein $k$ is chosen such that a bandwidth of the sensor signal is less than the first drivetrain frequency divided by $k$.

12. The method of claim 9, further comprising the step of adjusting the sensor sampling frequency in response to an adjustment of the first drivetrain frequency.


**Patentansprüche**

1. Mundreinigungsvorrichtung (10), umfassend:

    einen Körperabschnitt (12);
    ein Bürstenkopfglied (14), das sich vom Körperabschnitt erstreckt, wobei der Kopf umfasst eine Borstenseite (18), wobei die Borstenseite ausgelegt ist, um sich im Verhältnis zum Körperabschnitt zu bewegen;
    eine Zentraluhr (32);
    einen Sensor (28) in Kommunikation mit der Zentraluhr, wobei der Sensor ausgelegt ist, um Sensordaten mit einer Sensorsamplingfrequenz (42) zu sampeln, wobei die Samplingfrequenz auf einer Eingabe von der Zentraluhr basiert;
    eine zweite Uhr (32a); und
    einen Antriebsstrang (22) in Kommunikation mit der zweiten Uhr (32a),
    wobei der Antriebsstrang ausgelegt ist, um Bewegung der Borstenseite mit einer ersten Antriebsstrangfrequenz (40) zu erzeugen, wobei die erste Antriebsstrangfrequenz auf einer Eingabe von der zweiten Uhr (32a) basiert;
    wobei die Samplingfrequenz und die erste Antriebsstrangfrequenz koordiniert sind, um Antriebsstrangstörungen des Sensors zu minimieren.

2. Mundreinigungsvorrichtung nach Anspruch 1, weiter umfassend eine Steuerung (30), die ausgelegt ist, um von dem einen oder den mehreren Sensoren erhaltene Sensorinformationen zu verarbeiten.

3. Mundreinigungsvorrichtung nach Anspruch 2, wobei die Steuerung die Zentraluhr umfasst.

4. Mundreinigungsvorrichtung nach Anspruch 2, wobei die Zentraluhr von der Steuerung getrennt ist.

5. Mundreinigungsvorrichtung nach Anspruch 1, wobei die Sensorsamplingfrequenz gleich groß ist wie die erste Antriebsstrangfrequenz multipliziert mit (n+j/k), wobei $n$ eine ganze Zahl ist, $j$ eine positive ganze Zahl ist und $k$ eine positive ganze Zahl ist, und wobei weiter $0<j<k$.

6. Mundreinigungsvorrichtung nach Anspruch 5, wobei $k$ so ausgewählt, dass eine Bandbreite des Sensorsignals geringer ist als die erste Antriebsstrangfrequenz geteilt durch $k$.

7. Mundreinigungsvorrichtung nach Anspruch 1, wobei die erste Antriebsstrangfrequenz von einem Benutzer regelbar ist.

8. Mundreinigungsvorrichtung nach Anspruch 1, weiter umfassend:
    eine Steuerung (30) in Kommunikation mit der ersten Uhr und der zweiten Uhr, wobei die Steuerung ausgelegt ist, um Eingaben von der ersten Uhr und der zweiten Uhr zu empfangen und die Samplingfrequenz und die erste Antriebsstrangfrequenz zu koordinieren und Antriebsstrangstörungen des Sensors zu minimieren.

9. Verfahren (800) zum Minimieren von Störungen eines Sensors (28) einer Mundreinigungsvorrichtung (10), wobei das Verfahren die Schritte umfasst:

Bereitstellen (810) einer Mundreinigungsvorrichtung, umfassend: eine Zentraluhr (32); einen Sensor in Kommunikation mit der Zentraluhr, wobei der Sensor ausgelegt ist, um Sensordaten mit einer Sensorsamplingfrequenz (42) zu sampeln, wobei die Samplingfrequenz auf einer Eingabe von der Zentraluhr basiert; eine zweite Uhr; und einen Antriebsstrang (22) in Kommunikation mit der zweiten Uhr, wobei der Antriebsstrang ausgelegt ist, um Bewegung einer Borstenseite (18) der Vorrichtung mit einer ersten Antriebsstrangfrequenz (40) erzeugen, wobei die erste Antriebsstrangfrequenz auf einer Eingabe von der zweiten Uhr basiert;
Koordinieren (820) der Samplingfrequenz und der ersten Antriebsstrangfrequenz, um Antriebsstrangstörungen des Sensors zu minimieren; und
Erhalten (830) von Sensordaten vom Sensor.

**10.** Verfahren nach Anspruch 9, wobei die Sensorsamplingfrequenz gleich groß ist wie die erste Antriebsstrangfrequenz multipliziert mit (n+j/k), wobei $n$ eine ganze Zahl ist, $j$ eine positive ganze Zahl ist und $k$ eine positive ganze Zahl ist, und wobei weiter $0<j<k$.

**11.** Verfahren nach Anspruch 10, wobei $k$ so ausgewählt, dass eine Bandbreite des Sensorsignals geringer ist als die erste Antriebsstrangfrequenz geteilt durch $k$.

**12.** Verfahren nach Anspruch 9, weiter umfassend den Schritt des Regelns der Sensorsamplingfrequenz als Reaktion auf eine Regelung der ersten Antriebsstrangfrequenz.

## Revendications

**1.** Dispositif de nettoyage buccal (10) comprenant :

une partie de corps (12) ;
un élément de tête de brosse (14) s'étendant à partir de la partie de corps, la tête comprenant une face de soies (18), dans lequel la face de soies est configurée pour se déplacer par rapport à la partie de corps ;
une horloge principale (32) ;
un capteur (28) en communication avec l'horloge principale, dans lequel le capteur est configuré pour échantiller des données de capteur à une fréquence d'échantillonnage de capteur (42), la fréquence d'échantillonnage étant basée sur une entrée de l'horloge principale ;
une seconde horloge (32a) ; et
une transmission (22) en communication avec la seconde horloge (32a), dans lequel la transmission est configurée pour générer un mouvement de la face de soies à une première fréquence de transmission (40), la première fréquence de transmission étant basée sur une entrée de la seconde horloge (32a) ;
dans lequel la fréquence d'échantillonnage et la première fréquence de transmission sont coordonnées de façon à réduire au minimum une interférence de transmission du capteur.

**2.** Dispositif de nettoyage buccal selon la revendication 1, comprenant en outre un système de commande (30) configuré pour traiter des informations de capteur obtenues de l'un ou plusieurs capteur(s).

**3.** Dispositif de nettoyage buccal selon la revendication 2, dans lequel le système de commande comprend l'horloge principale.

**4.** Dispositif de nettoyage buccal selon la revendication 2, dans lequel l'horloge principale est séparée du système de commande.

**5.** Dispositif de nettoyage buccal selon la revendication 1, dans lequel la fréquence d'échantillonnage du capteur est égale à la première fréquence de transmission multipliée par (n+j/k), dans lequel $n$ est un nombre entier, $j$ est un nombre entier positif, et $k$ est un nombre entier positif, et en outre, dans lequel $0<j<k$.

**6.** Dispositif de nettoyage buccal selon la revendication 5, dans lequel $k$ est choisi de telle sorte qu'une largeur de bande du signal de capteur soit inférieure à la première fréquence de transmission divisée par $k$.

**7.** Dispositif de nettoyage buccal selon la revendication 1, dans lequel la première fréquence de transmission est ajustable par un utilisateur.

**8.** Dispositif de nettoyage buccal selon la revendication 1, comprenant en outre :
un système de commande (30) en communication avec la première horloge et la seconde horloge, dans lequel le système de commande est configuré pour recevoir une entrée de la première horloge et de la seconde horloge pour coordonner la fréquence d'échantillonnage et la première fréquence de transmission et réduire au minimum une interférence de transmission du capteur.

**9.** Procédé (800) destiné à réduire au minimum une interférence d'un capteur (28) d'un dispositif de nettoyage buccal (10), le procédé comprenant les étapes

de fourniture (810) d'un dispositif de nettoyage buccal comprenant : une horloge principale (32) ; un capteur en communication avec l'horloge principale, dans lequel le capteur est configuré pour échantillonner des données de capteur à une fréquence d'échantillonnage de capteur (42), la fréquence d'échantillonnage étant basée sur une entrée de l'horloge principale ; une seconde horloge ; et une transmission (22) en communication avec la seconde horloge, dans lequel la transmission est configurée pour générer un mouvement d'une face de soie (18) du dispositif à une première fréquence de transmission (40), la première fréquence de transmission étant basée sur une entrée de la seconde horloge ;
de coordination (820) de la fréquence d'échantillonnage et de la première fréquence de transmission de façon à réduire au minimum une interférence de transmission du capteur ; et
d'obtention (830) des données de capteur du capteur.

**10.** Procédé selon la revendication 9, dans lequel la fréquence d'échantillonnage de capteur est égale à la première fréquence de transmission multipliée par (n+j/k), dans lequel $n$ est un nombre entier, $j$ est un nombre entier positif, et $k$ est un nombre entier positif, et en outre, dans lequel $0<j<k$.

**11.** Procédé selon la revendication 10, dans lequel $k$ est choisi de telle sorte qu'une largeur de bande du signal de capteur soit inférieure à la première fréquence de transmission divisée par $k$.

**12.** Procédé selon la revendication 9, comprenant en outre l'étape d'ajustement de la fréquence d'échantillonnage de capteur en réponse à un ajustement de la première fréquence de transmission.

FIG. 1

Oral
cleaning
device
10

Sensor
28

Drivetrain
22

Controller
30

Processor
50

Memory
44

Clock
32

# FIG. 2

Oral
cleaning
device
10

Sensor
28

Clock
32

Drivetrain
22

Controller
30

Processor
50

Memory
44

Clock
33

# FIG. 3

Oral
cleaning
device
10

Sensor
28

Clock
32

Clock
32a

Drivetrain
22

Controller
30

Processor
50

Memory
44

# FIG. 4

520

Signal intensity

510

42

40

1S

1D
2S

3S

2D
4S

5S

3D
6S

Frequency

# FIG. 5

FIG. 6

FIG. 7

800

Provide an oral cleaning device ⌐810

Coordinate the drivetrain frequency and sensor sampling frequency to minimize interference of the sensor ⌐820

Obtain sensor data from the one or more sensors using the coordinated frequencies ⌐830

Adjust the drivetrain frequency and/or sensor sampling frequency to minimize interference of the sensor ⌐840

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014097198 A